# EUROPÄISCHE PATENTSCHRIFT

(11) **EP 0 877 191 B1**
(45) Veröffentlichungstag und Bekanntmachung des Hinweises auf die Patenterteilung: **17.09.2003**
(21) Anmeldenummer: 98108222.5
(22) Anmeldetag: 06.05.1998
(51) Int. Cl.: F16L 25/00, H02G 3/06

(54) **Anschlussmuffe für einen mit einer Schutzhülle für zugentlastete elektrische Leiter versehenen Schlauch**
Coupling sleeve for a hose with a protective sheath for strain-relieved electrical conductors
Manchon d'accouplement pour un tuyau avec une gaine protectrice pour câbles électriques à soulagement de tension

(30) Priorität: 07.05.1997 DE 29708274 U
(43) Veröffentlichungstag der Anmeldung: 11.11.1998
(73) Patentinhaber: TRUPLAST KUNSTSTOFFTECHNIK GMBH, D-35428 Langgöns (DE)
(72) Erfinder: Linhart, Georg, 61206 Wollstadt (DE)
(74) Vertreter: Oppermann, Mark, Dipl.-Ing.

(56) Entgegenhaltungen:
- EP-A- 0 742 399
- WO-A-98/17936
- DE-A- 4 441 478
- US-A- 4 162 370

## Beschreibung

Die Erfindung bezieht sich auf eine Anschlußmuffe für einen mit einer Schutzhülle für zugentlastete elektrische Leiter versehenen Schlauch nach dem Oberbegriff des Anspruches 1.

Es ist bereits eine Anschlußmuffe der im Oberbegriff des Anspruches 1 genannten Art vorgeschlagen worden. Die Schutzhülle besteht hierbei aus einem im Querschnitt runden Kunststoffschlauch. Als Vertiefung ist eine verhältnismäßig kurze, quer zur Achse des ebenfalls aus Kunststoff bestehenden ersten Muffenteils verlaufende Nut vorgesehen. In dieser sind die Enden zweier aus der Schutzhülle herausgeführter und durch die Wand des ersten Muffenteils hindurchgreifender, bandförmiger Zugentlastungselemente eingelegt. Diese sind durch in die Nut eingespritztes Material, das sich mit dem Material des ersten Muffenteils leicht verbindet, festgelegt. Das zweite Muffenteil besteht aus dem gleichen Kunststoff wie das erste Muffenteil und ist in seiner Bestimmungslage durch den in die Nut eingespritzten Kunststoff mit dem ersten Muffenteil verbunden. Die Schutzhülle ist an ihrem der Nut nahegelegenen Ende durch einen Stopfen verschlossen, der an die Innenseite des ersten Muffenteils angeformt ist. Das Einspritzen des die Enden der Zugentlastungselemente festlegenden und die beiden Muffenteile miteinander verbindenden Materials ist ein aufwendiger Fertigungsvorgang. Zudem ist am fertigen Erzeugnis durch Rückstände sichtbar, daß Material in die Muffenteile eingespritzt wurde.

Aufgabe der Erfindung ist es, die Anschlußmuffe nach dem Oberbegriff des Anspruches 1 so auszubilden, daß für das Festlegen des Zugentlastungselementes im ersten Muffenteil und die Verbindung der beiden Muffenteile ein Einspritzvorgang entbehrlich ist.

Die gestellte Aufgabe wird erfindungsgemäß durch die im kennzeichnenden Teil des Anspruches 1 angegebene Ausbildung gelöst.

Zweckmäßige Aus- und Weiterbildungen des Erfindungsgegenstandes sind in den Ansprüchen 2 bis 6 angegeben.

Ein Ausführungsbeispiel der Erfindung ist in der Zeichnung rein schematisch dargestellt.

Es zeigen:
- Fig. 1: einen Aufriß eines ersten Muffenteils.
- Fig. 2: einen Schnitt nach Linie II-II in Fig. 1.
- Fig. 3: einen Aufriß eines zweiten Muffenteils, in das ein außen wendelförmig verlaufender Wellentäler und Wellenberge aufweisender Schlauch eingreift.
- Fig. 4: einen Schnitt nach Linie IV-IV in Fig. 1.

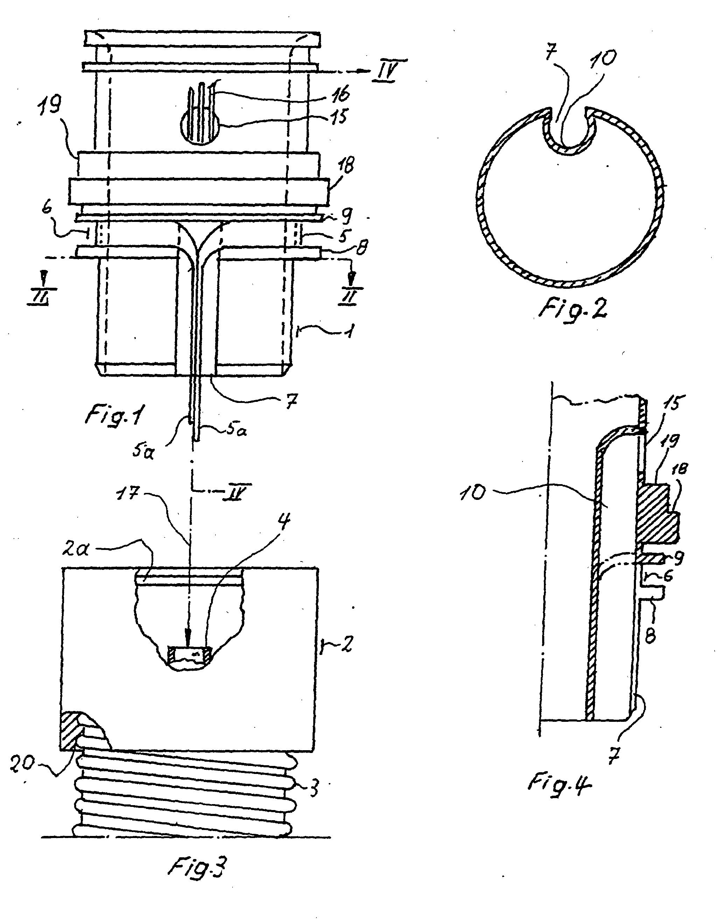

In der Zeichnung ist ein erstes Muffenteil mit 1 (Fig. 1) und ein zweites Muffenteil mit 2 (Fig. 2) bezeichnet. Die beiden Muffenteile 1, 2 bilden eine Anschlußmuffe für einen Saugschlauch 3 (Fig. 3), der zum Beispiel als Staubsaugerschlauch verwendbar ist. Die Teile 1 bis 3 sind so miteinander vereinigt, daß der Saugschlauch 3 in das zweite Muffenteil 2 eingreift und das erste Muffenteil 1 sowohl in das zweite Muffenteil 2 als auch in den Saugschlauch 3, der außen wendelförmig verlaufende, nicht bezeichnete Wellenberge und Wellentäler aufweist, eingreift. Im Saugschlauch 3 ist eine Schutzhülle 4 (Fig. 3) für zugentlastete elektrische Leiter befestigt. Die Schutzhülle 4 hat im dargestellten Beispiel einen kreisrunden Querschnitt.

Das erste Muffenteil 1 enthält eine Vertiefung, in der ein Zugentlastungselement 5 (Fig. 1) festgelegt ist. Die Vertiefung ist als Ringnut 6 ausgebildet.

Von dem in den Saugschlauch 3 einsteckbaren Ende des ersten Muffenteils 1 geht ein axial verlaufender Schlitz 7 aus (Fig. 1, 2 und 4), der sich durch einen ersten Bund 8 hindurch bis zu einem zweiten Bund 9 erstreckt. Die beiden Bunde 8, 9 bilden die seitliche Begrenzung der Ringnut 6.

Die Flanken des Schlitzes 7 gehen in eine rohrartige Anformung 10 (Fig. 2 und Fig. 4) über, die, wie der Schlitz 7, am Einsteckende des ersten Muffenteils 1 offen ist. An ihrem entgegengesetzten Ende ist die Anformung 10 geschlossen. Die Anformung 10 dient zur Aufnahme der Schutzhülle 4 in ihrer Bestimmungslage. Der Verschluß der Anformung 10 ist auf zweierlei Weise möglich.

Wie in Fig. 4 strichpunktiert dargestellt, kann die Wand der Anformung 10 zum zweiten Bund 9 hochgezogen sein. Dies gilt für den Fall, daß das Zugentlastungselement 5 und eventuell die elektrischen Leiter aus der Schutzhülle 4 in die Ringnut 6 geführt sind. Zur besseren Übersicht sind in Fig. 4 das Zugentlastungselement 5 und die elektrischen Leiter nicht dargestellt.

Eine zweite Möglichkeit des Verschlusses der Anformung 10 ist ebenfalls aus Fig. 4 ersichtlich. Die Anformung 10 erstreckt sich hier bis hinter eine Öffnung 15 in der Wand des ersten Muffenteils 1 und ist dort an die Wand des ersten Muffenteils 1 hochgezogen. Die Öffnung ist im dargestellten Beispiel zwischen dem Mund und einem vierten Bund 19 des ersten Muffenteils 1 vorgesehen. Diese Anordnung ermöglicht es, in Fig. 1 mit 16 bezeichnete elektrische Leiter aus dem ersten Muffenteil 1 herauszuführen. Das Zugentlastungselement 5 dagegen ist durch den Schlitz 7 hindurch in die Ringnut 6 eingeführt.

Das Zugentlastungselement 5 umgreift den Boden der Ringnut 6 wie eine Schlinge. Deren freie Enden 5a verlaufen durch den Schlitz 7 hindurch in Richtung der Schutzhülle 4, wie in Fig. 1, in Verbindung mit Fig. 2, zu ersehen ist (siehe auch Pfeil 17).

Auf nicht gezeigte Weise können die freien Enden 5a des schlingenförmigen Abschnittes des Zugentlastungselementes 5 am Übergang vom Boden der Ringnut 6 in den Schlitz 7 verknotet sein, wodurch sich ein besonders guter Sitz des Zugentlastungselementes 5 in der Ringnut 6 ergibt.

In seiner Bestimmungslage greift das erste Muffenteil 1 in das zweite Muffenteil 2 soweit ein, bis das zweite Muffenteil 2 an einem dritten Bund 18 anliegt, der somit einen Anschlag für die Einstecktiefe des ersten Muffenteils 1 in das zweite Muffenteil 2 bildet. Das zweite Muffenteil 2 ist mit einer Innennut 2a versehen. Diese ist so angeordnet, daß in sie der zweite Bund 9 formschlüssig eingreift, wenn das zweite Muffenteil 2 am dritten Bund 18 des ersten Muffenteils 1 anliegt.

Der Saugschlauch 3 weist auf seiner äußeren Mantelfläche wendelförmig verlaufende Wellenberge und Wellentäler auf. An die innere Mantelfläche des zweiten Muffenteils 2 ist mindestens ein Gewindegang 20 zum Einschrauben des Saugschlauches 3 angeformt (Fig. 3).

## Patentansprüche

1. Anschlußmuffe, bestehend aus einem ersten Muffenteil (1) und einem zweiten Muffenteil (2), für einen mit einer Schutzhülle (4) für zugentlastete elektrische Leiter (16) versehenen Saugschlauch, mit den Merkmalen:
a) die Schutzhülle (4) ist an der inneren Mantelfläche des Saugschlauches (3) befestigt, in den das erste Muffenteil (1) teilweise eingreift,
b) im ersten Muffenteil (1) ist eine Vertiefung vorgesehen, die eine quer zur Achse des ersten Muffenteils verlaufende Nut ist und in der ein aus der Schutzhülle (4) herausgeführtes Zugentlastungselement (5) festgelegt ist,
c) das den Saugschlauch (3) umgreifende zweite Muffenteil (2) überdeckt die Vertiefung,
d) das erste Muffenteil (1) und das zweite Muffenteil (2) sind miteinander verbunden,
**gekennzeichnet durch** die Merkmale:
e) die Vertiefung für das Zugentlastungselement (5) ist eine Ringnut (6),
f) vom Einsteckende des ersten Muffenteils (1) geht ein axialer Schlitz (7) aus, der **durch** einen die eine Wand der Ringnut (6) bildenden ersten Bund (8) hindurchgeht und sich bis zu einem zweiten Bund (9) erstreckt, der die andere Wand der Ringnut (6) bildet,
g) die Schlitzflanken gehen in eine für die Aufnahme des zugeordneten Endes der Schutzhülle (4) ausgebildete rohrartige Anformung (10) über, die zum offenen Ende des Schlitzes (7) hin offen und am entgegengesetzten Ende geschlossen ist, und
h) ein zu einer Schlinge geformter Abschnitt des Zugentlastungselementes (5) umgreift den Boden der Ringnut (6), während die freien Enden (5a) der Schlinge **durch** den Schlitz (7) hindurch in die Schutzhülle (4) geführt sind.

2. Anschlußmuffe nach Anspruch 1, **dadurch gekennzeichnet, daß** die freien Enden (5a) der Schlinge am Übergang vom Ringboden in den Schlitz (7) verknotet sind.

3. Anschlußmuffe nach Anspruch 1 und 2, **dadurch gekennzeichnet, daß** der Saugschlauch (3) auf seiner äußeren Mantelfläche wendelförmig verlaufende Wellenberge und Wellentäler aufweist und daß an die innere Mantelfläche des zweiten Muffenteils (2) mindestens ein Gewindegang (20) zum Einschrauben des Saugschlauches (3) angeformt ist.

4. Anschlußmuffe nach Anspruch 1 bis 3, **dadurch gekennzeichnet, daß** das zweite Muffenteil (2) nahe seinem freien Ende eine innere Nut (2a) für den formschlüssigen Eingriff des zweiten Bundes (9) aufweist.

5. Anschlußmuffe nach Anspruch 1 bis 4, **dadurch gekennzeichnet, daß** ein vor dem zweiten Bund (9) angeordneter dritter Bund (18) einen Anschlag für die freie Stirnfläche des zweiten Muffenteils (2) bildet.

6. Anschlußmuffe nach Anspruch 1 bis 5, **dadurch gekennzeichnet, daß** sich die rohrförmige Anformung (10) bis zu einer zwischen dem Mund des ersten Muffenteils (1) und einem vierten Bund (19) gelegenen Öffnung (15) im Mantel des ersten Muffenteils (1) erstreckt und erst hinter dieser Öffnung (15) geschlossen ist, und daß die elektrischen Leiter(16) ab dem zugeordneten Ende der Schutzhülle (4) bis zur Öffnung (15) geführt und dann aus dieser herausgeführt sind.

## Claims

1. Junction box, comprising a first box part (1) and a second box part (2) for a suction tube provided with a protective sleeve (4) for tension-relieved, electrical conductors (16), having the features:
a) the protective sleeve (4) is fixed to the inner circumferential surface of the suction tube (3), in which partly engages the first box part (1)_{,}
b) in the first box part (1) is provided a depression, which is a groove running transversely to the axis of the first box part and in which is fixed a tension relief element 5) led out of the protective sleeve (4),
c) the second box part (2) embracing the suction tube (3) covers the depression,
d) the first box part (1) and the second box part (2) are interconnected,
**characterized by** the features:
e) the depression for the tension relief element (5) is an annular groove (6),
f) an axial slot (7) emanates from the engagement end of the first box part (1) and passes through a first collar (18) forming one wall of the annular groove (6) and extends to a second collar (9) forming the other wall of the annular groove (6),
g) the slot flanks pass into a tubular moulding (10) constructed for receiving the associated end of the protective sleeve (4) and which is open to the open end of the slot (7) and closed at the opposite end, so that a portion of the tension relief element (5) shaped to a loop embraces the base of the annular groove (6), whilst the free ends (5a) of the loop are guided through the slot (7) into the protective sleeve (4).

2. Junction box according to claim 1, **characterized in that** the free ends (5) of the loop are knotted at the transition from the annular base into the slot (7).

3. Junction box according to claim 1 and 2, **characterized in that** the suction tube (3) has on its outer circumferential surface helically directed wave crests and wave troughs and that onto the inner circumferential surface of the second box part (2) is shaped at least one thread (20) for screwing in the suction tube (3).

4. Junction box according to claim 1 to 3, **characterized in that** the second box part (2) has an inner groove (2a) for the positive engagement of the second collar (9) close to its free end. .

5. Junction box according to claim 1 to 4, **characterized in that** a third collar (18) positioned upstream of the second collar (9) forms a stop for the free end face of the second junction box (2).

6. Junction box according to claim 1 to 5, **characterized in that** the tubular moulding (10) extends up to an opening (15) in the jacket of the first box part (1) placed between the mouth of the first box part (1) and a fourth collar (19) and is only closed behind said opening (15) and that the electrical conductors (16) are guided from the associated end of the protective sleeve (4) to the opening (15) and are then led out of the latter.

## Revendications

1. Manchon de raccordement constitué par une première partie de manchon (1) et par une deuxième partie de manchon (2) pour un tuyau d'aspiration pourvu d'une gaine de protection (4) pour un conducteur électrique à soulagement de tension, présentant les éléments suivants :
a) la gaine de protection (4) est fixée sur la surface enveloppe intérieure du tuyau d'aspiration (3) dans lequel s'engage partiellement la première partie de manchon (1),
b) dans la première partie de manchon (1) est prévu un renfoncement qui est une gorge s'étendant transversalement à l'axe de la première partie de manchon et dans laquelle est immobilisé un élément de soulagement de tension (5) sorti hors de la gaine de protection (4),
c) la deuxième partie de manchon (2) entourant le tuyau d'aspiration (3) recouvre le renfoncement,
d) la première partie de manchon (1) et la deuxième partie de manchon (2) sont reliées l'une à l'autre,
**caractérisé par** les caractéristiques suivantes :
e) le renfoncement pour l'élément de soulagement de tension (5) est une gorge annulaire (6),
f) depuis l'extrémité d'emmanchement de la première partie de manchon (1) part une fente (7) axiale qui traverse une première collerette (8) formant une paroi de la gorge annulaire (6) et qui s'étend jusqu'à une deuxième collerette (9) qui forme l'autre paroi de la gorge annulaire (6),
g) les flancs de fente se transforment en une conformation (10) tubulaire réalisée pour recevoir l'extrémité associée de la gaine de protection (4), laquelle est ouverte vers l'extrémité ouverte de la fente (7) et fermée à l'extrémité opposée, de sorte qu'un tronçon formant une boucle, de l'élément de soulagement de traction (5), entoure le fond de la gorge annulaire (6) tandis que les extrémités libres (Sa) de la boucle sont passées à travers la fente (7) jusque dans la gaine de protection (4).

2. Manchon de raccordement selon la revendication 1, **caractérisé en ce que** les extrémités libres (5a) de la boucle sont nouées au passage depuis le fond annulaire jusque dans la fente (7).

3. Manchon de raccordement selon l'une ou l'autre des revendications 1 et 2, **caractérisé en ce que** le tuyau d'aspiration (3) présente sur sa surface enveloppe extérieure des sommets et des creux ondulés de forme hélicoïdale, et **en ce que** sur la surface enveloppe intérieure de la deuxième partie de manchon (2) est formé au moins un pas de vis (20) pour visser le tuyau d'aspiration (3).

4. Manchon de raccordement selon l'une des revendications 1 à 3, **caractérisé en ce que** la deuxième partie de manchon (2) présente à proximité de son extrémité libre une gorge intérieure (2a) pour l'engagement par coopération de formes de la deuxième collerette (9).

5. Manchon de raccordement selon l'une des revendications 1 à 4, **caractérisé en ce qu'**une troisième collerette (18) agencée devant la deuxième collerette (9) forme une butée pour la face frontale libre de la deuxième partie de manchon (2).

6. Manchon de raccordement selon l'une des revendications 1 à 5, **caractérisé en ce que** la conformation (10) tubulaire s'étend dans l'enveloppe de la première partie de manchon (1) jusqu'à une ouverture (15) située entre l'embouchure de la première partie de manchon (1) et une quatrième collerette (19) et n'est fermée que derrière cette ouverture (15), et **en ce que** le conducteur électrique (16) est guidé depuis l'extrémité associée de la gaine de protection (4) jusqu'à l'ouverture (15) et est ensuite sorti hors de celle-ci.
